# EUROPÄISCHE PATENTSCHRIFT

(11) **EP 3 243 420 B1**
(45) Veröffentlichungstag und Bekanntmachung des Hinweises auf die Patenterteilung: **24.02.2021**
(21) Anmeldenummer: 17169645.3
(22) Anmeldetag: 05.05.2017
(51) Int. Cl.: A47L 15/00, D06F 35/00, C02F 5/00, A47J 31/60

(54) **VORRICHTUNG UND VERFAHREN ZUM LÖSEN VON KALKABLAGERUNGEN IN EINEM WASSERFÜHRENDEN HAUSHALTSGERÄT**
DEVICE AND METHOD FOR LOOSENING LIMESTONE DEPOSITS IN A WATER-BEARING HOUSEHOLD DEVICE
DISPOSITIF ET PROCÉDÉ DESTINÉS À DISSOUDRE DES DÉPÔTS CALCAIRES DANS UN APPAREIL MÉNAGER AQUIFÈRE

(30) Priorität: 12.05.2016 DE 102016208165
(43) Veröffentlichungstag der Anmeldung: 15.11.2017
(73) Patentinhaber: BSH Hausgeräte GmbH, 81739 München (DE)
(72) Erfinder: Calvimontes, Alfredo, 89407 Dillingen a. d. Donau (DE); Paintner, Kai, 86465 Welden (DE)

(56) Entgegenhaltungen:
- DE-A1- 3 629 959
- DE-U1- 8 807 135
- US-A1- 2012 103 025

## Beschreibung

Die vorliegende Erfindung betrifft eine Vorrichtung zum Lösen von Kalkablagerungen in einem wasserführenden Haushaltsgerät. Des Weiteren betrifft die vorliegende Erfindung ein wasserführendes Haushaltsgerät, insbesondere eine Geschirrspülmaschine, mit einer solchen Vorrichtung. Darüber hinaus betrifft die vorliegende Erfindung ein Verfahren zum Lösen von Kalkablagerungen in einem wasserführenden Haushaltsgerät.

In wasserführenden Haushaltsgeräten, wie beispielsweise Geschirrspülmaschinen, Waschmaschinen oder Kaffeevollautomaten, kann es zu Kalkablagerungen kommen. Diese Kalkablagerungen, bzw. Ablagerung von Calciumcarbonaten oder Calciumphosphaten, entstehen in den wasserführenden Bereichen der Geräte durch Ausfällungen aus Wasser. Das Ausmaß der Kalkablagerungen hängt von der Wasserhärte sowie der verwendeten Wassertemperatur ab. Bei höheren Temperaturen entstehen stärkere Kalkablagerungen.

Die entstandenen Kalkablagerungen können durch Verwendung von chemischen Mitteln entfernt werden. Zu diesen zählen Amidosulfonsäure, Zitronensäure und Natriumcarbonat, die dazu dienen, Carbonsäure zu bilden. Mit Hilfe der Carbonsäure können die Calciumatome des Kalks gemäß der folgenden Formel gelöst werden:

CaCO₃(ₛ) + H₂CO_{3(aq)} → Ca²⁺_{(aq)} + 2HCO₃⁻_{(aq)}

Hierbei stellt CaCO₃₍ₛ₎ den Kalk dar und H₂CO_{3(aq)} die Carbonsäure. Nach dem Lösen des Kalks entstehen Calciumatome Ca²⁺_{(aq)}, sowie Hydrogencarbonate 2HCO₃⁻_{(aq)}, die aus der Maschine mit dem Wasser herausgespült werden können.

EP 2 976 979 A1 beschreibt eine Waschvorrichtung, in der Kalkablagerungen mittels eines Entkalkers entfernt werden. Der Entkalker wird dabei beispielsweise in Pulverform hinzugefügt und kann aus Zitronensäure, Apfelsäure oder ähnlichem bestehen.

Die DE 36 29 959 A1 offenbart ein wasserführendes, beheizbares Haushaltsgerät, bei dem das zulaufende Wasser mit CO₂ angereichert wird, wobei das zur Anreicherung benötigte CO₂ aus einer im Haushaltsgerät untergebrachten, mit CO₂ gefüllten Flasche entnommen wird.

Vor diesem Hintergrund besteht eine Aufgabe der vorliegenden Erfindung darin, Kalkablagerungen in einem wasserführenden Haushaltsgerät ohne Zugabe von chemischen Mitteln oder anderen Entkalkern zu lösen.

Demgemäß wird eine Vorrichtung zum Lösen von Kalkablagerungen in einem wasserführenden Haushaltsgerät vorgeschlagen. Die Vorrichtung weist eine Filtereinheit zum Filtern von Kohlenstoffdioxid aus der Umgebungsluft auf, wobei die Filtereinheit einen Zufluss zum Zuführen von Wasser in die Filtereinheit und einen Abfluss aufweist, und dazu eingerichtet ist, das aus der Umgebungsluft gefilterte Kohlendioxid in dem zugeführten Wasser zu lösen, um eine Lösung aus Wasser und Kohlenstoffdioxid zu bilden. Der Abfluss ist dazu eingerichtet, die Lösung aus der Filtereinheit abzuführen. Des Weiteren weist die Vorrichtung eine Zuleitung zum Zuführen der Lösung in das wasserführende Haushaltsgerät auf, um Kalkablagerungen in wasserführenden Bereichen des wasserführenden Haushaltsgeräts zu lösen.

Wie bereits oben erläutert, kann zum Lösen von Kalkablagerungen (CaCO₃₍ₛ₎) Carbonsäure (H₂CO_{3(aq)}) verwendet werden. Anstelle von chemischen Zusätzen, wie Zitronensäure oder anderen Entkalkern, wird in der vorgeschlagenen Vorrichtung Kohlenstoffdioxid CO₂ aus der Luft herausgefiltert, um mit diesem und Wasser (H₂O) die benötigte Carbonsäure zu bilden. Es ist somit nicht erforderlich, dem Haushaltsgerät Entkalker zuzuführen. Stattdessen wird die Umgebungsluft gefiltert, um Kohlenstoffdioxid zu erhalten. Hierdurch wird zusätzlich der CO₂-Gehalt der Luft reduziert.

Als Filtereinheit kann dabei ein Filter verwendet werden, der dazu geeignet ist, das Kohlenstoffdioxid aus der Luft herauszufiltern. Dies kann beispielsweise durch Absorption des Kohlenstoffdioxids aus der Luft in einem Absorptionsmittel erfolgen oder durch einen Filter, der das Kohlenstoffdioxid von der Luft durch physikalische Separation trennt. Anschließend wird Wasser durch die Filtereinheit über den Zufluss durchgeleitet. Das Wasser löst das Kohlenstoffdioxid in der Filtereinheit und bildet eine Lösung. Diese Lösung besteht aus Wasser sowie Carbonsäure und kann auch als karbonisiertes Wasser bezeichnet werden. Über den Abfluss kann diese Lösung aus der Filtereinheit abgeführt werden.

Anschließend kann die Lösung über die Zuleitung den wasserführenden Bereichen des Haushaltsgeräts zugeführt werden. Das bedeutet, dass die Lösung durch das Haushaltsgerät durchgeleitet wird, wie Wasser im normalen Betrieb des Haushaltsgeräts durchgeleitet wird. Somit werden alle Bereiche, in denen sich Kalk abgelagert haben kann, mit der Lösung durchgespült und der Kalk gelöst. Die Lösung und der darin gelöste Kalk werden wie Brauch- oder Schmutzwasser aus dem Haushaltsgerät wieder herausgeführt.

Die Vorrichtung kann direkt in das Haushaltsgerät integriert sein. Alternativ kann die Vorrichtung als separate Vorrichtung über die normale Wasserzuleitung mit dem Haushaltsgerät verbunden werden.

Gemäß einer Ausführungsform ist die Lösung eine gesättigte Lösung.

Das bedeutet, dass das Wasser beim Durchlaufen der Filtereinheit so viel Kohlenstoffdioxid aufnimmt, wie möglich. Somit kann die Kalklösungsleistung maximiert werden. Die Menge an aufnehmbarem Kohlenstoffdioxid hängt von der vorherherrschenden Temperatur sowie Druck ab.

Gemäß einer weiteren Ausführungsform weist die Filtereinheit zumindest eine Membran auf.

Die zumindest eine Membran kann dabei aus einem Polymer und/oder einer Keramik bestehen. Die Membran kann beispielsweise als Hohlfaser ausgebildet sein. Die Filtereinheit kann eine Vielzahl solcher Hohlfasern aufweisen, durch die die Luft durchgeleitet wird. Die Luft wird dabei quer zur Faser durchgeleitet, um das Kohlenstoffdioxid aus der Luft zu filtern. Das Kohlenstoffdioxid wird beispielsweise durch Nanoporen der Membran absorbiert. Das Wasser kann anschließend längs zur Faser durch die Filtereinheit durchgeleitet werden, um das Kohlenstoffdioxid in dem Wasser zu lösen.

Gemäß einer weiteren Ausführungsform ist die Filtereinheit dazu eingerichtet, die Umgebungsluft durch die zumindest eine Membran durchzuleiten.

Die Filtereinheit kann hierzu einen Lufteinlass aufweisen. Über einen Ventilator oder eine sonstige Luftansaugvorrichtung wird die Luft über den Lufteinlass in die Filtereinheit befördert und anschließend durch die Membran geleitet. Dies kann beispielsweise während des normalen Betriebs des Haushaltsgeräts erfolgen, wobei das Drehmoment der Wasserpumpe für den Betrieb des Ventilators verwendet werden kann.

Gemäß einer weiteren Ausführungsform ist die Filtereinheit dazu eingerichtet, die Umgebungsluft nach dem Filtern von Kohlenstoffdioxid an die Atmosphäre abzugeben.

Die Filtereinheit kann hierzu einen Luftauslass aufweisen. Über diesen wird die kohlenstoffdioxidreduzierte Luft wieder aus der Filtereinheit herausbefördert.

Gemäß einer weiteren Ausführungsform weist die Vorrichtung eine Ableitung zum Ableiten der Lösung mit gelösten Kalkablagerungen aus dem wasserführenden Haushaltsgerät auf.

Durch die Ableitung können die Kalkablagerungen aus dem Haushaltsgerät entfernt werden. Die Ableitung kann auch Teil des Haushaltsgeräts selbst sein und beispielsweise dem Ablauf, der im normalen Betrieb verwendet wird, entsprechen.

Gemäß einer weiteren Ausführungsform weist die Vorrichtung eine Steuervorrichtung auf, die dazu eingerichtet ist, den Zufluss und den Abfluss der Filtereinheit und die Zuleitung zu dem wasserführenden Haushaltsgerät zu steuern.

Durch die Steuervorrichtung kann entweder manuell oder automatisiert eine Entkalkung des Haushaltgeräts geregelt werden.

Gemäß einer weiteren Ausführungsform ist die Steuervorrichtung dazu eingerichtet, die Lösung in einem vorbestimmten Intervall in das wasserführende Haushaltsgerät zu leiten.

Das vorbestimmte Intervall kann beispielsweise einer bestimmten Anzahl von Betriebszyklen des Haushaltsgeräts entsprechen. Bei einer Geschirrspülmaschine können dies 20 bis 30 Durchläufe sein.

Gemäß einer weiteren Ausführungsform ist die Steuervorrichtung dazu eingerichtet, das Intervall basierend auf einer Härte des Wassers zu bestimmen.

Das Intervall kann entsprechend der vorherrschenden Wasserhärte angepasst werden. Hierzu kann ein Sensor vorgesehen sein, der die Wasserhärte bestimmt. Alternativ kann die Wasserhärte auch durch einen Benutzer eingegeben werden. Bei hartem Wasser kann das Intervall kürzer eingestellt werden als bei weicherem Wasser.

Gemäß einer weiteren Ausführungsform ist die Steuervorrichtung dazu eingerichtet, die Lösung gemäß einer Benutzereingabe über die Zuleitung in das wasserführende Haushaltsgerät zu leiten.

Der Entkalkungsprozess kann auch durch einen Benutzer initiiert werden. Die Steuervorrichtung kann aufgrund einer solchen Benutzereingabe die Filtereinheit anweisen, die Lösung in das Haushaltsgerät zu leiten.

Gemäß einer weiteren Ausführungsform weist die Vorrichtung einen Behälter zum Speichern der Lösung auf.

Die Lösung kann auch auf Vorrat hergestellt und in einem Behälter, wie einem Tank, aufbewahrt werden. Dieser Tank kann in dem Haushaltsgerät integriert sein oder separat mit Anschluss an das Haushaltsgerät angeordnet sein.

Gemäß einer weiteren Ausführungsform steht der Behälter unter Druck.

Somit ist es möglich, eine übersättigte Lösung herzustellen. Hierdurch kann das Entfernen von Kalkablagerungen weiter verbessert werden, da die Konzentration des Kohlenstoffdioxids in der Lösung erhöht werden kann.

Gemäß einer weiteren Ausführungsform weist der Behälter einen Sensor zum Bestimmen der Konzentration des Kohlenstoffdioxids in der Lösung auf.

Ist die Konzentration zu niedrig, um damit effektiv Kalkablagerungen lösen zu können, kann eine Rückmeldung an die Filtereinheit gegeben werden, um die Konzentration zu erhöhen.

Des Weiteren wird ein wasserführendes Haushaltsgerät, insbesondere eine Geschirrspülmaschine, mit einer wie oben beschriebenen Vorrichtung zum Lösen von Kalkablagerungen in dem wasserführenden Haushaltsgerät vorgeschlagen. Die Vorrichtung kann dabei direkt in das Haushaltsgerät integriert sein. Die Zuführung des Wassers in die Filtereinheit der Vorrichtung kann dann über den Wasseranschluss bzw. - zulauf des Haushaltsgeräts erfolgen.

Darüber hinaus wird ein Verfahren zum Lösen von Kalkablagerungen in einem wasserführenden Haushaltsgerät vorgeschlagen. Das Verfahren weist die folgenden Schritte auf: Filtern von Kohlenstoffdioxid aus der Umgebungsluft durch eine Filtereinheit, Zuführen von Wasser in die Filtereinheit, um das aus der Umgebungsluft gefilterte Kohlendioxid in dem zugeführten Wasser zu lösen, um eine Lösung aus Wasser und Kohlenstoffdioxid zu bilden, Abführen der Lösung aus der Filtereinheit, und Zuführen der Lösung in das wasserführende Haushaltsgerät, um Kalkablagerungen in wasserführenden Bereichen des wasserführenden Haushaltsgeräts zu lösen.

Die für die vorgeschlagene Vorrichtung beschriebenen Ausführungsformen und Merkmale gelten für das vorgeschlagene Verfahren entsprechend.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht einer Ausführungsform eines Haushaltsgeräts;
Fig. 2 zeigt ein schematisches Blockdiagramm einer Vorrichtung zum Lösen von Kalkablagerungen in dem Haushaltsgerät; und
Fig. 3 zeigt ein Ausführungsbeispiel eines Verfahrens zum Betreiben der Vorrichtung zum Lösen von Kalkablagerungen in dem Haushaltsgerät.

In den Figuren sind gleiche oder funktionsgleiche Elemente mit denselben Bezugszeichen versehen worden, sofern nichts anderes angegeben ist.

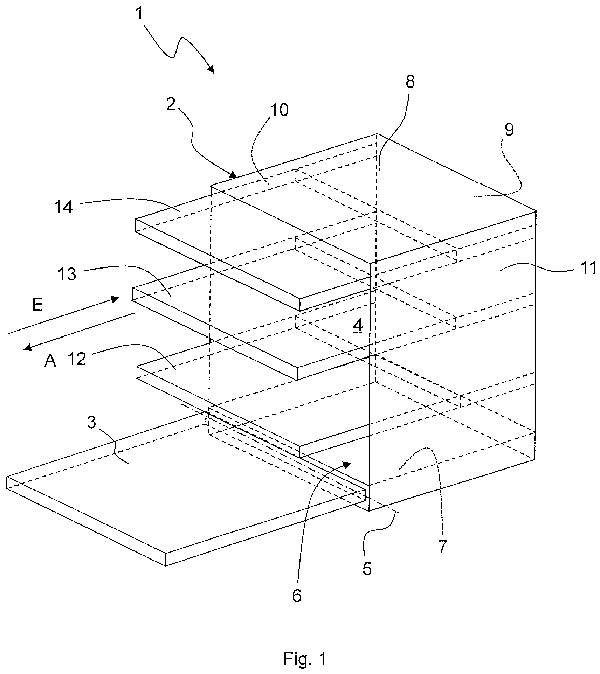

Die Fig. 1 zeigt eine schematische perspektivische Ansicht eines, insbesondere wasserführenden, Haushaltsgeräts 1. Das Haushaltsgerät 1 kann beispielsweise eine Geschirrspülmaschine, eine Waschmaschine, ein Kühlschrank, ein Kaffeevollautomat oder dergleichen sein. In der Fig. 1 ist eine Geschirrspülmaschine gezeigt. Das Haushaltsgerät 1 weist einen Aufnahmebereich 2 auf, der durch eine Tür 3, insbesondere wasserdicht verschließbar ist. Hierzu kann zwischen der Tür 3 und dem Aufnahmebereich 2 eine Dichteinrichtung vorgesehen sein. Der Aufnahmebereich 2 kann ein Spülbehälter der in der Fig. 1 gezeigten Geschirrspülmaschine sein. Der Aufnahmebereich 2 ist vorzugsweise quaderförmig. Insbesondere kann der Aufnahmebereich 2 aus einem Stahlblech gefertigt sein. Alternativ kann der Aufnahmebereich 2 zumindest abschnittsweise aus einem Kunststoffmaterial gefertigt sein. Der Aufnahmebereich 2 und die Tür 3 können eine Spülkammer 4 zum Spülen von Spülgut bilden. Der Aufnahmebereich 2 kann im Inneren eines Gehäuses des Haushaltsgeräts 1 angeordnet sein.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Der Aufnahmebereich 2 weist eine Wandung 6 mit einem Boden 7, einer dem Boden 7 gegenüberliegend angeordneten Decke 8, einer der Tür 3 gegenüberliegend angeordneten Rückwand 9 und zwei einander gegenüberliegend angeordneten Seitenwänden 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Das Haushaltsgerät 1 weist weiterhin zumindest eine Spülgutaufnahme 12 bis 14 auf. Insbesondere können mehrere Spülgutaufnahmen 12 bis 14 vorgesehen sein, wobei diese einen Unterkorb 12, einen Oberkorb 13 und/oder eine Besteckschublade 14 umfassen können. Die mehreren Spülgutaufnahmen 12 bis 14 sind vorzugsweise übereinander in dem Aufnahmebereich 2 angeordnet. Jede Spülgutaufnahme 12 bis 14 ist wahlweise in den Aufnahmebereich 2 hinein oder aus diesem heraus verlagerbar. Insbesondere ist jede Spülgutaufnahme 12 bis 14 in einer Einschubrichtung E in den Aufnahmebereich 2 hineinschiebbar und entgegen der Einschubrichtung E in einer Auszugsrichtung A aus dem Aufnahmebereich 2 herausziehbar.

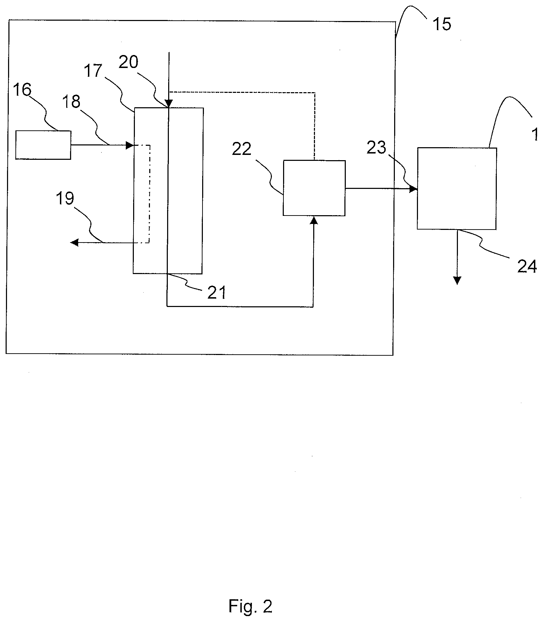

Um Kalkablagerungen, die in dem Haushaltsgerät 1 entstehen können, zu lösen, wird eine Vorrichtung 15, wie sie in Fig. 2 gezeigt ist, verwendet.

Die Vorrichtung 15 dient dazu, eine Lösung herzustellen, die Carbonsäure enthält. Durch die Carbonsäure können Kalkablagerungen in dem Haushaltsgerät 1 gelöst werden. Zur Herstellung dieser Lösung wird mittels eines Ventilators 16 Luft, d.h. Umgebungsluft, über einen Einlass 18 in eine Filtereinheit 17 geführt.

Die Filtereinheit 17 kann beispielsweise eine Membran beinhalten, die das Kohlenstoffdioxid aus der Luft filtert oder absorbiert. Nach Durchlaufen der Filtereinheit 17 wird die Luft, die nun weniger Kohlenstoffdioxid enthält als zuvor, durch einen Auslass 19 wieder der Atmosphäre zugeführt.

Über einen Zufluss 20 wird Wasser durch die Filtereinheit 17 durchgeleitet. Das Wasser löst das Kohlenstoffdioxid aus der Filtereinheit 17 bzw. resorbiert dieses. Die daraus entstehende Lösung ist mit Kohlenstoffdioxid angereichert und enthält daher auch Carbonsäure, die Kalkablagerungen lösen kann.

Die Lösung kann über einen Abfluss 21 entweder direkt in das Haushaltsgerät 1 geleitet werden, oder in einem Behälter bzw. Tank 22 zwischengelagert werden.

Bei Bedarf kann die Lösung von dem Behälter 22 über eine Zuleitung 23 in das Haushaltsgerät geleitet werden. Diese Zuleitung 23 kann der Zuleitung entsprechen, über die im normalen Betrieb des Haushaltsgeräts 1 Wasser zugeführt wird.

Nachdem die Lösung das Haushaltsgerät 1 bzw. dessen wasserführenden Teile durchlaufen hat, wird die Lösung mit den gelösten Kalkablagerungen über eine Ableitung 24 wieder aus dem Haushaltsgerät 1 herausgeleitet.

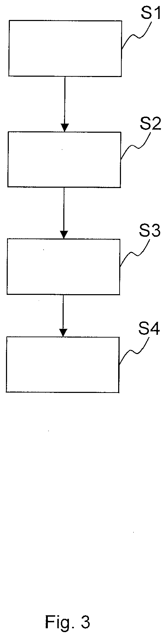

Fig. 3 ein Ausführungsbeispiel eines Verfahrens zum Lösen von Kalkablagerungen in einem wasserführenden Haushaltsgerät 1. Das Verfahren weist die folgenden Schritte auf:
In einem ersten Schritt S1 wird Kohlenstoffdioxid aus der Umgebungsluft durch eine Filtereinheit 17 gefiltert.

In einem zweiten Schritt S2 wird Wasser in die Filtereinheit 17 zugeführt, um das aus der Umgebungsluft gefilterte Kohlendioxid in dem zugeführten Wasser zu lösen, um eine Lösung aus Wasser und Kohlenstoffdioxid zu bilden.

Anschließend wird in einem dritten Schritt S3 die Lösung aus der Filtereinheit 17 abgeführt.

In einem vierten Schritt S4 wird die Lösung in das wasserführende Haushaltsgerät 1 geleitet, um Kalkablagerungen in wasserführenden Bereichen des wasserführenden Haushaltsgeräts 1 zu lösen.

Durch die beschriebene Vorrichtung 15 sowie das beschriebene Verfahren ist es möglich, Kalkablagerungen in einem Haushaltsgerät 1 auch ohne Zugabe von chemischen Entkalkern zu entfernen. Gleichzeitig wird der Kohlenstoffdioxidgehalt der Luft reduziert.

Obwohl die vorliegende Erfindung anhand von Ausführungsbeispielen beschrieben wurde, ist sie vielfältig modifizierbar.

### Verwendete Bezugszeichen:

- 1: wasserführendes Haushaltsgerät
- 2: Aufnahmebereich
- 3: Tür
- 4: Spülkammer
- 5: Schwenkachse
- 6: Wandung
- 7: Boden
- 8: Decke
- 9: Rückwand
- 10, 11: Seitenwände
- 12: Unterkorb
- 13: Oberkorb
- 14: Besteckschublade
- 15: Vorrichtung
- 16: Ventilator
- 17: Filtereinheit
- 18: Einlass
- 19: Auslass
- 20: Zufluss
- 21: Abfluss
- 22: Behälter
- 23: Zuleitung
- 24: Ableitung

- A: Auszugsrichtung
- E: Einschubrichtung
- S1-S4: Verfahrensschritte

## Patentansprüche

1. Vorrichtung (15) zum Lösen von in einem wasserführenden Haushaltsgerät (1) entstandenen Kalkablagerungen, mit einer Filtereinheit (17) zum Filtern von Kohlenstoffdioxid aus der Umgebungsluft, wobei die Filtereinheit (17) einen Zufluss (20) zum Zuführen von Wasser in die Filtereinheit (17) und einen Abfluss (21) aufweist und dazu eingerichtet ist, das aus der Umgebungsluft gefilterte Kohlendioxid in dem zugeführten Wasser zu lösen, um eine Lösung aus Wasser und Kohlenstoffdioxid zu bilden, und wobei der Abfluss (21) dazu eingerichtet ist, die Lösung aus der Filtereinheit (17) abzuführen, und mit einer Zuleitung (22) zum Zuführen der Lösung in das wasserführende Haushaltsgerät (1), um Kalkablagerungen in wasserführenden Bereichen des wasserführenden Haushaltsgeräts (1) zu lösen.

2. Vorrichtung (15) nach Anspruch 1, **dadurch gekennzeichnet, dass** die Filtereinheit (17) zumindest eine Membran aufweist.

3. Vorrichtung (15) nach Anspruch 2, **dadurch gekennzeichnet, dass** die Filtereinheit (17) dazu eingerichtet ist, die Umgebungsluft durch die zumindest eine Membran durchzuleiten.

4. Vorrichtung (15) nach einem der Ansprüche 1 - 3, **dadurch gekennzeichnet, dass** die Filtereinheit (17) dazu eingerichtet ist, die Umgebungsluft nach dem Filtern von Kohlenstoffdioxid an die Atmosphäre abzugeben.

5. Vorrichtung (15) nach einem der Ansprüche 1 - 4, **gekennzeichnet durch** eine Steuervorrichtung, die dazu eingerichtet ist, den Zufluss (20) und den Abfluss (21) der Filtereinheit (17) und die Zuleitung (23) zu den wasserführenden Bereichen des wasserführenden Haushaltsgeräts (1) zu steuern.

6. Vorrichtung (15) nach Anspruch 5, **dadurch gekennzeichnet, dass** die Steuervorrichtung dazu eingerichtet ist, die Lösung in einem vorbestimmten Intervall in die wasserführenden Bereiche des wasserführenden Haushaltsgeräts (1) zu leiten.

7. Vorrichtung (15) nach Anspruch 6, **dadurch gekennzeichnet, dass** die Steuervorrichtung dazu eingerichtet ist, das Intervall basierend auf einer Härte des Wassers zu bestimmen.

8. Vorrichtung (15) nach einem der Ansprüche 5 - 7, **dadurch gekennzeichnet, dass** die Steuervorrichtung dazu eingerichtet ist, die Lösung gemäß einer Benutzereingabe über die Zuleitung (23) in die wasserführenden Bereiche des wasserführenden Haushaltsgeräts (1) zu leiten.

9. Vorrichtung (15) nach einem der Ansprüche 1 - 8, **gekennzeichnet durch** einen Behälter (22) zum Speichern der Lösung.

10. Wasserführendes Haushaltsgerät (1), insbesondere Geschirrspülmaschine, mit einer Vorrichtung (15) nach einem der Ansprüche 1 - 9 zum Lösen von Kalkablagerungen in dem wasserführenden Haushaltsgerät (1).

11. Wasserführendes Haushaltsgerät (1) nach Anspruch 10, **gekennzeichnet durch** eine Ableitung (24) zum Ableiten der Lösung mit gelösten Kalkablagerungen aus dem wasserführenden Haushaltsgerät (1).

12. Verfahren zum Lösen von Kalkablagerungen in einem wasserführenden Haushaltsgerät (1), mit
Filtern (S1) von Kohlenstoffdioxid aus der Umgebungsluft durch eine Filtereinheit (17),
Zuführen (S2) von Wasser in die Filtereinheit (17), um das aus der Umgebungsluft gefilterte Kohlendioxid in dem zugeführten Wasser zu lösen, um eine Lösung aus Wasser und Kohlenstoffdioxid zu bilden,
Abführen (S3) der Lösung aus der Filtereinheit (17), und
Zuführen (S4) der Lösung in das wasserführende Haushaltsgerät (1), um Kalkablagerungen in wasserführenden Bereichen des wasserführenden Haushaltsgeräts (1) zu lösen.

13. Verfahren nach Anspruch 12, **dadurch gekennzeichnet dass** die Lösung eine gesättigte Lösung ist.

## Claims

1. Device (15) for loosening limescale deposits produced in a water-bearing household appliance (1), with a filter unit (17) for filtering carbon dioxide from the ambient air, wherein the filter unit (17) has an inflow (20) for supplying water into the filter unit (17) and an outflow (21) and is designed to loosen the carbon dioxide filtered from the ambient air in the supplied water in order to form a solution made from water and carbon dioxide, and wherein the outflow (21) is designed to discharge the solution from the filter unit (17) and with a supply line (22) for supplying the solution into the water-bearing household appliance (1), in order to loosen limescale deposits in the water-bearing regions of the water-bearing household appliance (1).

2. Device (15) according to claim 1, **characterised in that** the filter unit (17) has at least one membrane.

3. Device (15) according to claim 2, **characterised in that** the filter unit (17) is designed to convey the ambient air through the at least one membrane.

4. Device (15) according to one of claims 1 - 3, **characterised in that** the filter unit (17) is designed to output the ambient air to the atmosphere after filtering carbon dioxide.

5. Device (15) according to one of claims 1- 4, **characterised by** a control device, which is designed to control the inflow (2) and the outflow (21) of the filter unit (17) and the supply line (23) to the water-bearing regions of the water-bearing household appliance (1).

6. Device (15) according to claim 5, **characterised in that** the control device is designed to route the solution at a predetermined interval into the water-bearing regions of the water-bearing household appliance (1).

7. Device (15) according to claim 6, **characterised in that** the control device is designed to determine the interval on the basis of the water hardness.

8. Device (15) according to one of claims 5 - 7, **characterised in that** the control device is designed to route the solution in accordance with a user input via the supply line (23) into the water-bearing regions of the water-bearing household appliance (1).

9. Device (15) according to one of claims 1 - 8, **characterised by** a container (22) for storing the solution.

10. Water-bearing household appliance (1), in particular dishwasher, with a device (15) according to one of claims 1 - 9 for loosening limescale deposits in the water-bearing household appliance (1).

11. Water-bearing household appliance (1) according to claim 10, **characterised by** a drain (24) for draining the solution with the loosened limescale deposits from the water-bearing household appliance (1).

12. Method for loosening limescale deposits in a water-bearing household appliance (1), with
Filtering (S1) carbon dioxide from the ambient air through a filter unit (17), Supplying (S2) water into the filter unit (17), in order to release the carbon dioxide filtered from the ambient air in the supplied water, in order to form a solution made from water and carbon dioxide,
Discharging (S3) the solution from the filter unit (17), and
Supplying (S4) the solution into the water-bearing household appliance (1), in order to loosen limescale deposits in the water-bearing regions of the water-bearing household appliance (1).

13. Method according to claim 12, **characterised in that** the solution is a saturated solution.

## Revendications

1. Dispositif (15) pour dissoudre des dépôts calcaires formés dans un appareil ménager (1) acheminant de l'eau, comprenant une unité de filtration (17) servant à filtrer du dioxyde de carbone à partir de l'air ambiant, dans lequel l'unité de filtration (17) comprend une admission (20) pour alimenter de l'eau dans l'unité de filtration (17) et une sortie (21) et est configurée pour dissoudre le dioxyde de carbone filtré à partir de l'air ambiant dans l'eau alimentée, afin de former une solution d'eau et de dioxyde de carbone, et dans lequel la sortie (21) est configurée pour évacuer la solution depuis l'unité de filtration (17), et comprenant une conduite d'alimentation (23) pour alimenter la solution dans l'appareil ménager acheminant de l'eau (1), afin de dissoudre des dépôts calcaires dans des zones acheminant de l'eau de l'appareil ménager acheminant de l'eau (1).

2. Dispositif (15) selon la revendication 1, **caractérisé en ce que** l'unité de filtration (17) comprend au moins une membrane.

3. Dispositif (15) selon la revendication 2, **caractérisé en ce que** l'unité de filtration (17) est configurée pour faire passer l'air ambiant à travers l'au moins une membrane.

4. Dispositif (15) selon l'une des revendications 1 à 3, **caractérisé en ce que** l'unité de filtration (17) est configurée pour libérer l'air ambiant dans l'atmosphère après la filtration de dioxyde de carbone.

5. Dispositif (15) selon l'une des revendications 1 à 4, **caractérisé par** un dispositif de commande, qui est conçu pour commander l'admission (20) et la sortie (21) de l'unité de filtration (17) et l'alimentation (23) jusqu'aux zones acheminant de l'eau de l'appareil ménager acheminant de l'eau (1).

6. Dispositif (15) selon la revendication 5, **caractérisé en ce que** le dispositif de commande est configuré pour diriger la solution à un intervalle prédéterminé dans les zones acheminant de l'eau de l'appareil ménager acheminant de l'eau (1).

7. Dispositif (15) selon la revendication 6, **caractérisé en ce que** le dispositif de commande est configuré pour déterminer l'intervalle en fonction de la dureté de l'eau.

8. Dispositif (15) selon l'une des revendications 5 à 7, **caractérisé en ce que** le dispositif de commande est configuré pour diriger, selon une entrée par un utilisateur, la solution dans les zones acheminant de l'eau de l'appareil ménager acheminant de l'eau (1) via la conduite d'alimentation (23).

9. Dispositif (15) selon l'une des revendications 1 à 8, **caractérisé par** un réservoir (22) pour stocker la solution.

10. Appareil ménager acheminant de l'eau (1), en particulier lave-vaisselle, comprenant un dispositif (15) selon l'une des revendications 1 à 9 pour dissoudre des dépôts calcaires dans l'appareil ménager acheminant de l'eau (1).

11. Appareil ménager acheminant de l'eau (1) selon la revendication 10, **caractérisé par** une conduite d'évacuation (24) pour évacuer la solution comprenant des dépôts calcaires dissous hors de l'appareil ménager acheminant de l'eau (1).

12. Procédé pour dissoudre des dépôts calcaires dans un appareil ménager acheminant de l'eau (1), comprenant les étapes suivantes :
filtration (S1) du dioxyde de carbone à partir de l'air ambiant par une unité de filtration (17),
alimentation (S2) d'eau dans l'unité de filtration (17), afin de dissoudre le dioxyde de carbone filtré dans l'eau introduite et former une solution d'eau et de dioxyde de carbone,
évacuation (S3) de la solution hors de l'unité de filtration (17), et
alimentation (S4) de la solution dans l'appareil ménager acheminant de l'eau (1), afin de dissoudre des dépôts calcaires dans des zones acheminant de l'eau de l'appareil ménager acheminant de l'eau (1).

13. Procédé selon la revendication 12, **caractérisé en ce que** la solution est une solution saturée.
